# EUROPÄISCHE PATENTSCHRIFT

(11) **EP 2 489 271 B1**
(45) Veröffentlichungstag und Bekanntmachung des Hinweises auf die Patenterteilung: **20.07.2016**
(21) Anmeldenummer: 12155483.6
(22) Anmeldetag: 15.02.2012
(51) Int. Cl.: A21C 1/02, A21C 1/14, B01F 7/16, B01F 15/00, B01F 13/10

(54) **Vorrichtung zum Bearbeiten von Teig**
Device for processing dough
Dispositif destiné au traitement de pâte

(30) Priorität: 21.02.2011 DE 102011004433
(43) Veröffentlichungstag der Anmeldung: 22.08.2012
(73) Patentinhaber: Neuenkirchener Maschinenfabrik Emil Kemper GmbH, 33397 Rietberg (DE)
(72) Erfinder: Baak, Meinolf, 33397 Rietberg (DE); Hagenhoff, Thomas, 33129 Delbrück (DE)
(74) Vertreter: Rau, Schneck & Hübner Patentanwälte Rechtsanwälte PartGmbB

(56) Entgegenhaltungen:
- EP-A1- 0 092 857
- DE-A1- 19 820 272
- DE-C- 296 789
- GB-A- 2 054 395
- SE-B- 431 152
- US-A- 2 791 405
- US-A- 3 877 683

## Beschreibung

Die Erfindung betrifft eine Vorrichtung zum Bearbeiten von Teig. Ferner betrifft die Erfindung ein Bearbeitungskarussell mit mindestens zwei derartigen Teigbearbeitungsvorrichtungen und mindestens einem Teigbottich.

Bearbeitungsvorrichtungen für Teig sind bekannt aus der DE 198 20 272 C2, der DE 689 03 071 T2 und der DE 603 04 657 T2. Weitere Mischer sind bekannt aus der DE 600 06 433 T2 und der DE 60 2004 008 152 T2. Aus der DE-PS 296 789 ist eine Einrichtung an Teigknetmaschinen zur lösbaren Befestigung eines drehbaren Bottichs an einem Maschinengestell bekannt. Die SE 431 152 B, GB 2 054 395 A und EP 0 092 857 A1 zeigen jeweils Vorrichtungen zum Bearbeiten von Teig in einem Bottich, wobei jeweils ein bewegliches Befestigungselement vorgesehen ist, das eine Rotationsbewegung eines Antriebsmotors auf den Bottich überträgt und den Bottich gleichzeitig befestigt.

Die SE 431 152 B offenbart eine Vorrichtung entsprechend dem Oberbegriff des Anspruch 1.

Es ist eine Aufgabe der vorliegenden Erfindung, eine Teigbearbeitungsvorrichtung derart weiterzubilden, dass eine Zeitdauer zur Fixierung eines Teigbottichs in einer Bearbeitungsposition, in der eine Bearbeitung durch die Bearbeitungsvorrichtung möglich ist, minimiert ist.

Diese Aufgabe ist erfindungsgemäß gelöst durch eine Teigbearbeitungsvorrichtung mit den im Anspruch 1 angegebenen Merkmalen.

Erfindungsgemäß wurde erkannt, dass eine Halteeinrichtung mit axialer, also längs der Bottich-Hochachse, wirkender Klemmung zur Möglichkeit führt, einen Klemmhub zwischen einer Klemmstellung und einer Freigabestellung der Halteeinrichtung mit geringem Weg auszubilden. Die Klemmkraft, die der Klemmstempel auf den Gegen-Klemmkörper ausübt, wirkt in axialer Richtung. Der Bottich wird im Betrieb der Bearbeitungsvorrichtung motorisch in an sich bekannter Weise um die Hochachse gedreht. Das Umstellen in die Klemmstellung und damit das Fixieren des Teigbottichs in eine Bearbeitungsposition kann dann sehr rasch erfolgen. Umstellzeiten im Bereich weniger Sekunden, beispielsweise im Bereich von 2 s, sind möglich. Leerlaufzeiten, in denen der Teig nicht bearbeitet werden kann, werden entsprechend verringert. Ein Axialantrieb des Klemmstempels ermöglicht ein automatisiertes Arbeiten der Halteeinrichtung. Der Klemmstempel kann hydraulisch angetrieben sein und mit einem Hubzylinder und einem Hubkolben zusammenwirken. Auch ein anderer Antrieb, beispielsweise ein pneumatischer oder ein elektromechanischer Antrieb, für den Klemmstempel ist möglich.

Eine profilierte Ausführung des Klemmstempels nach Anspruch 2 verbessert die Klemmwirkung des Klemmstempels. Die Profilierung des Klemmstempels kann mit einer vorzugsweise komplementär ausgeführten Gegenprofilierung des Bottich-Klemmfußes zusammenwirken. Hierdurch kann eine exakte Positionierung des Teigbottichs in der Bearbeitungsposition erreicht werden.

Eine zweiteilige Ausführung des Gegen-Klelmmkörpers nach Anspruch 3 führt zu einer besonders sicheren Klemmung.

Eine Bearbeitungsvorrichtung mit einem Karussellantrieb und einem Gegen-Klemmkörper mit zwei Klemmschienen nach Anspruch 4 führt zur Möglichkeit einer Integration der Bearbeitungsvorrichtung in ein Bearbeitungskarussell mit einer Mehrzahl von Bearbeitungsstationen, wobei eine sichere Klemmung des Teigbottichs in der Bearbeitungsposition gegeben ist. Die Bogenform der Verlagerungsrichtung kann mit der Bogenform des Zwischenraums zwischen den Klemmschienen exakt zusammenfallen. Dies führt zur Möglichkeit, einen Zwischenraum zwischen dem Bottich-Klemmfuß und den beiden Klemmschienen in radialer Richtung dieser Bogenform zu minimieren, so dass eine positionssichere Klemmung resultiert. Die Klemmschienen können zudem eine Führung der Bottichverlagerung im Bereich der Bearbeitungsposition bewerkstelligen. Alternativ zur Ausgestaltung, bei der der Karussellantrieb ein Bestandteil der Bearbeitungsvorrichtung ist, kann ein Bearbeitungskarussell auch mit einem zentralen Karussellantrieb gestaltet sein, so dass die einzelnen Bearbeitungsvorrichtungen des Bearbeitungskarussells keinen eigenen Karussellantrieb aufweisen.

Die Vorteile eines Bearbeitungskarussells nach Anspruch 5 entsprechen denen, die vorstehend unter Bezugnahme auf die Bearbeitungsvorrichtung bereits erläutert wurden. Ein drehbarer Bottich-Klemmfuß ermöglicht bei geklemmtem Bottich-Klemmfuß ein Verdrehen des Bottich-Behälters um die Bottich-Hochachse, was für eine Teigbearbeitung vorteilhaft ist.

Ein Ausführungsbeispiel der Erfindung wird nachfolgend anhand der Zeichnung näher erläutert. In dieser zeigen:
- Fig. 1: eine Vorrichtung zum Bearbeiten von Teig in einer im Bereich einer Verbindung zwischen der Bearbeitungsvorrichtung und einem Teigbottich teilweise geschnitten dargestellten Seitenansicht;
- Fig. 2: vergrößert das Detail II in Fig. 1;
- Fig. 3: eine Aufsicht auf die Bearbeitungsvorrichtung;
- Fig. 4: perspektivisch eine Halteeinrichtung der Bearbeitungsvorrichtung zur lösbaren Halterung des Teigbottichs;
- Fig. 5: eine Aufsicht auf die Halteeinrichtung nach Fig. 4;
- Fig. 6: einen Schnitt gemäß VI-VI in Fig. 5; und
- Fig. 7: perspektivisch den Teigbottich der Bearbeitungsvorrichtung.

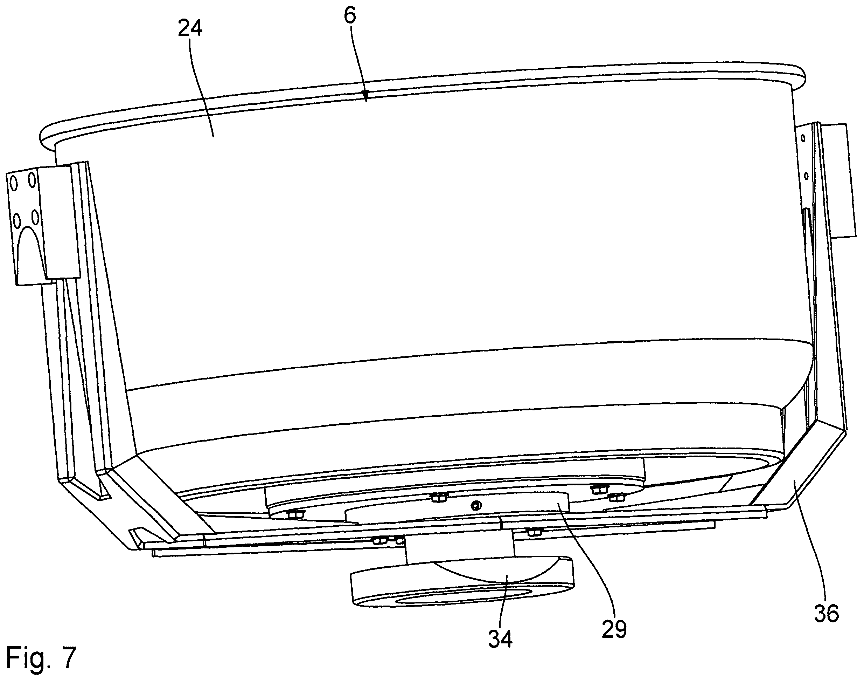

Eine Bearbeitungsvorrichtung 1 zum Bearbeiten und insbesondere zum Mischen und Kneten von Teig hat einen Tragrahmen 2 innerhalb eines Maschinengehäuses 3 mit einem Ständer 4 und einem Arm 5, der auch als Kopf bezeichnet ist. Ein Bottich 6 der Bearbeitungsvorrichtung 1 dient zur Aufnahme des zu knetenden und zu mischenden Teiges. Der Bottich 6 ist perspektivisch in der Fig. 7 dargestellt.

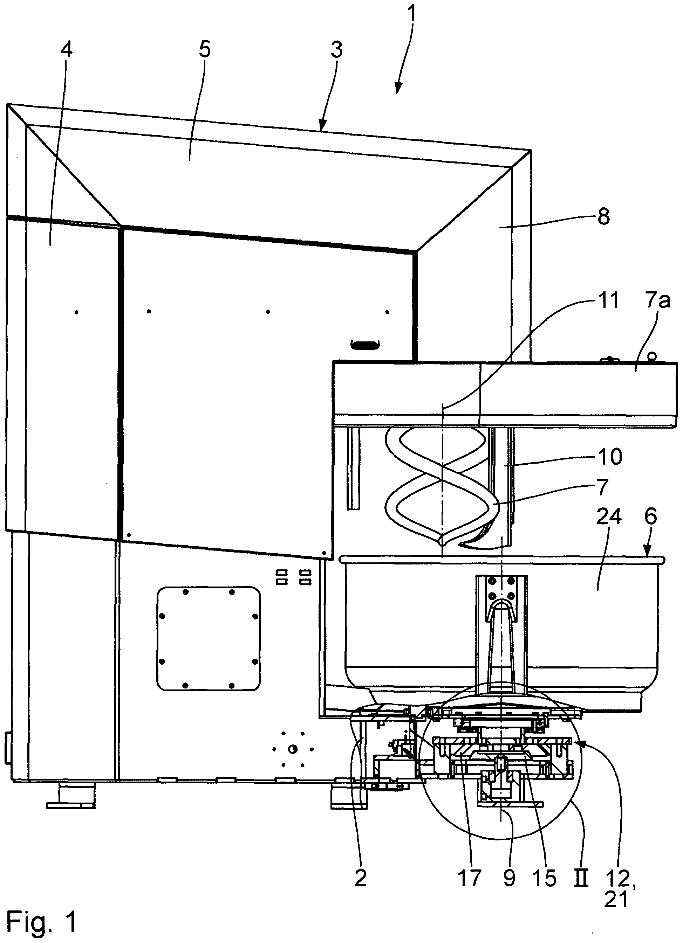

An einer Rahmenplatte des Tragrahmens 2, die innerhalb des Arms 5 verläuft, gelagert ist ein Knetwerkzeug 7 in Form einer vertikalen Doppel-Knetspirale. Bei der Bearbeitungsvorrichtung 1 handelt es sich also um einen Doppelwerkzeugkneter mit zwei Knetspiralen. Das Knetwerkzeug 7 ist in der Fig. 1 in einer Ruhestellung dargestellt, in der das Knetwerkzeug 7 vollständig in vertikaler Richtung aus dem Teigbottich 6 herausgezogen ist. Das Knetwerkzeug 7 ragt in einer Arbeitsstellung, die in der Figur 1 nicht dargestellt ist, ausgehend von einem über den Ständer 4 überstehenden Kopfabschnitt 8 des Arms 5 von oben her in den Bottich 6 hinein. Teil des Knetwerkzeugs 7 ist ein Deckel 7a, der in der Arbeitsstellung des Knetwerkzeugs 7 den Teigbottich 6 nach oben hin abdeckt. Der Deckel 7a stellt eine Mehlstaubschutzhaube dar.

Ein Volumen innerhalb des sich um eine Hochachse 9 angetrieben drehbaren Bottichs 6, das beim Betrieb des Knetwerkzeugs 7 von diesem geknetet und gemischt werden kann, gibt eine Knetzone vor. Außerhalb der Knetzone liegt der zu knetende und zu mischende Teig in einer Ruhezone vor. Zwischen der Knetzone und der Ruhezone des Bottichs 6 ist im Bereich der Hochachse 9 ein Leitkörper 10 des Knetwerkzeugs 7 zum Leiten einer Bewegung des Teiges im Bottich 6 angeordnet. Zwischen dem Leitkörper 10 und der Ruhezone kann sich im Betrieb der Bearbeitungsvorrichtung 1 eine vertikal verlaufende Luftsäule innerhalb des Bottichs 6 ausbilden.

Der Bottich 6 wird im Betrieb der Bearbeitungsvonichtung 1 motorisch in an sich bekannter Weise um die Hochachse 9 gedreht. Dies geschieht über einen Reibradantrieb, der in einer Ruhestellung vom Bottich 6 weg geschwenkt wird.

Weiterhin wird das Knetwerkzeug 7 um eine zentrale, ebenfalls vertikal verlaufende Knetspiralachse 11, die parallel beabstandet zur Hochachse 9 verläuft, motorisch angetrieben. Dieser Knetantrieb ist im Deckel 7a des Knetwerkzeugs 7 untergebracht.

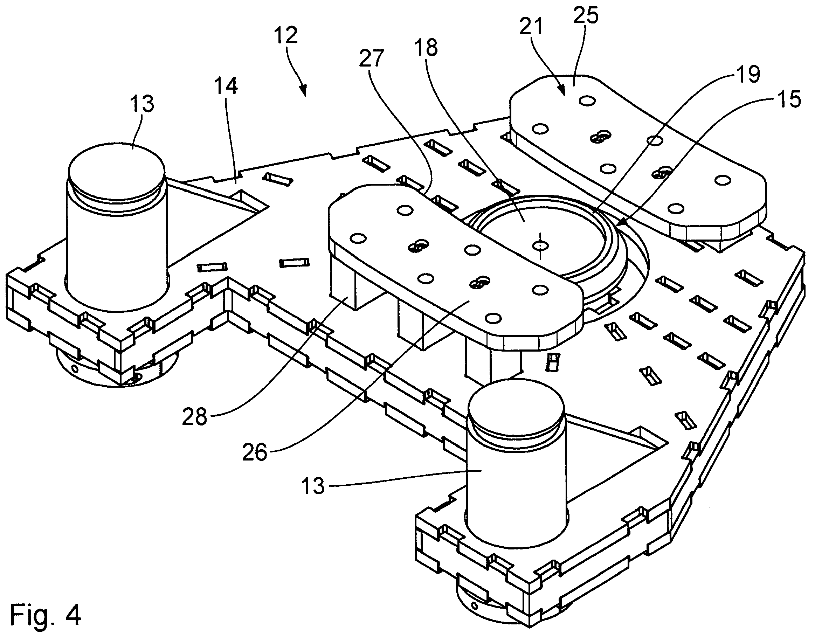

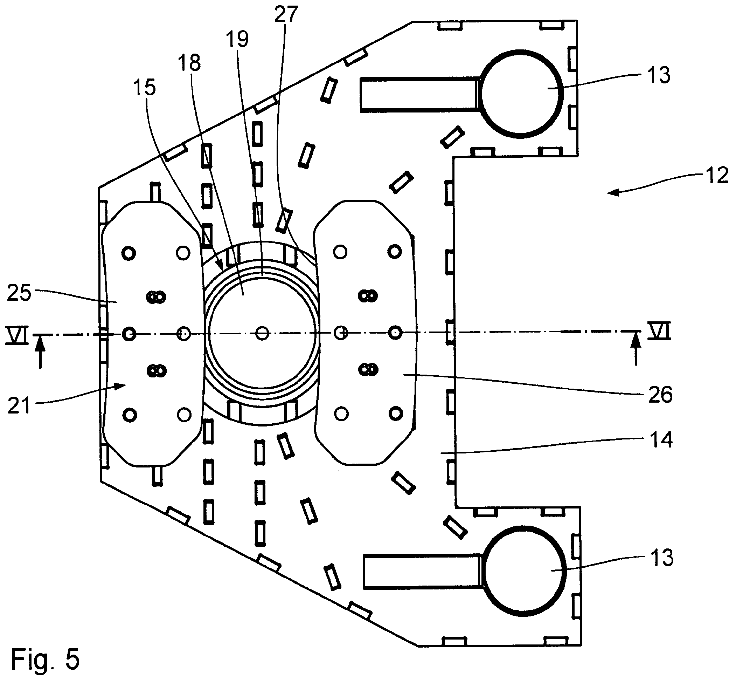

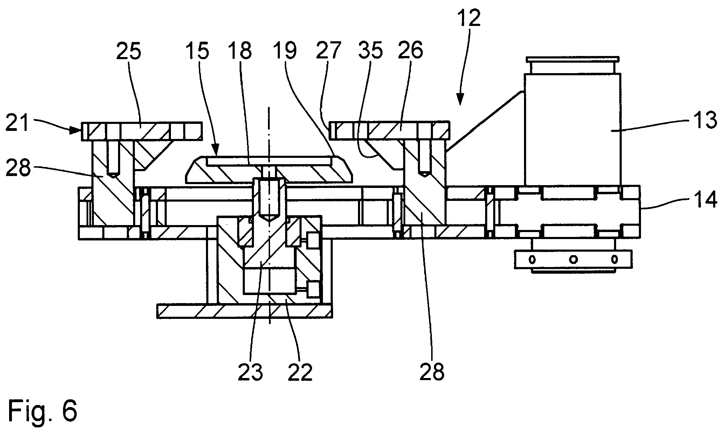

Die Bearbeitungsvorrichtung 1 hat eine Halteeinrichtung 12 zur lösbaren Halterung des Teigbottichs 6. Diese Halteeinrichtung 12, die auch als Kesselaufnahme bezeichnet ist, ist insgesamt in den Fig. 4 bis 6 dargestellt. Über zwei Bolzen 13 ist eine Grundrahmenplatte 14 der Halteeinrichtung 12 mit dem Tragrahmen 2 der Bearbeitungsvorrichtung 1 verschraubt.

Die Halteeinrichtung 12 hat einen Klemmstempel 15 zur Anlage an einer Unterseite 16 eines bodenseitig am Teigbottich 6 angebrachten Bottich-Klemmfußes 17. Diese Anlage des Klemmstempels 15 am Bottich-Klemmfuß 17 erfolgt mit einer Klemmkraft in axialer Richtung längs der Bottich-Hochachse 9. Eine Anlagewand 18 des Klemmstempels 15 ist zur Anlage an der Unterseite 16 des Bottich-Klemmfußes 17 profiliert ausgeführt. Diese Profilierung ist als um die Anlagewand 18 außen umlaufender, erhabener Spannring 19 ausgeführt. Die Unterseite 16 des Bottich-Klemmfußes 17 des Bottichs 6 ist mit einer komplementär zu dieser Profilierung der Anlagewand 18 ausgeführten Gegenprofilierung ausgebildet. Diese Gegenprofilierung weist eine komplementär zum Spannring 19 ausgestaltete umlaufende Ausnehmung 20 auf.

Der Klemmstempel 15 ist axial angetrieben relativ zur Grundrahmenplatte 14 und relativ zu einem in Bezug auf die Grundrahmenplatte 14 stationären Gegen-Klemmkörper 21 verlagerbar. Für diesen Axialantrieb des Klemmstempels 15 hat die Halteeinrichtung 12 einen hydraulischen Hubzylinder 22, der unterhalb des Klemmstempels 15 angeordnet und an der Grundrahmenplatte 14 festgelegt ist. Im Hubzylinder 22 läuft ein Hubkolben 23, dessen freies Ende mit dem Klemmstempel 15 verschraubt ist.

Anstelle eines hydraulischen Antriebs kann ein Axialantrieb für den Klemmstempel 15 auch durch einen anderen Antriebstyp realisiert sein.

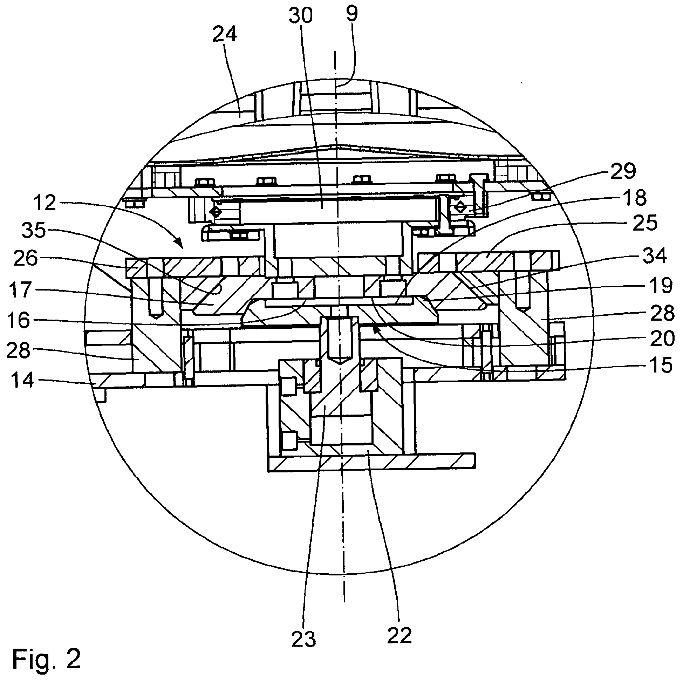

Der Gegen-Klemmkörper 21 der Halteeinrichtung 12 dient zum Hintergreifen des Bottich-Klemmfußes 17 zwischen dem Bottich-Klemmfuß 17 und einem Bottichbehälter 24 des Teigbottichs 6. In der in den Fig. 1 und 2 dargestellten Klemmstellung der Halteeinrichtung 12 bei aus dem Hubzylinder 22 ausgefahrenem Hubkolben 23 ist der Bottich-Klemmfuß 17 axial zwischen dem Klemmstempel 15 und dem Gegen-Klemmkörper 21 geklemmt.

Der Gegen-Klemmkörper 21 ist zweiteilig ausgeführt und hat zwei Klemmschienen 25, 26, zwischen denen ein bogenförmiger Zwischenraum 27 vorliegt. Die beiden Klemmschienen 25, 26 sind über Distanzträger 28 mit der Grundrahmenplatte 14 verschweißt.

Zwischen dem Bolzen 13 und der Grundplatte 14 sind keilförmige Knotenbleche zur Aufnahme von Kräften angeordnet.

Die beiden Klemmschienen 25, 26 hintergreifen den im Zwischenraum 27 angeordneten Bottich-Klemmfuß 17 beidseitig.

Der Bottich-Klemmfuß 17 des Teigbottichs 6 ist um die Bottich-Hochachse 9 drehbar am Bottichbehälter 24 gelagert. Diese Lagerung ist gegeben durch ein Kugellager 29. Letzteres stellt ein Axial-/Radiallager dar. Das Kugellager 29 bildet eine hintergreifende Aufnahme, die einen den Boden des Bottichbehälters 24 zugewandten Umfangsbund 30 des Bottich-Klemmfußes 17 hintergreift. Bei festgelegtem Bottich-Klemmfuß 17 kann sich der Bottichbehälter 24 also um die Bottich-Hochachse 9 drehen.

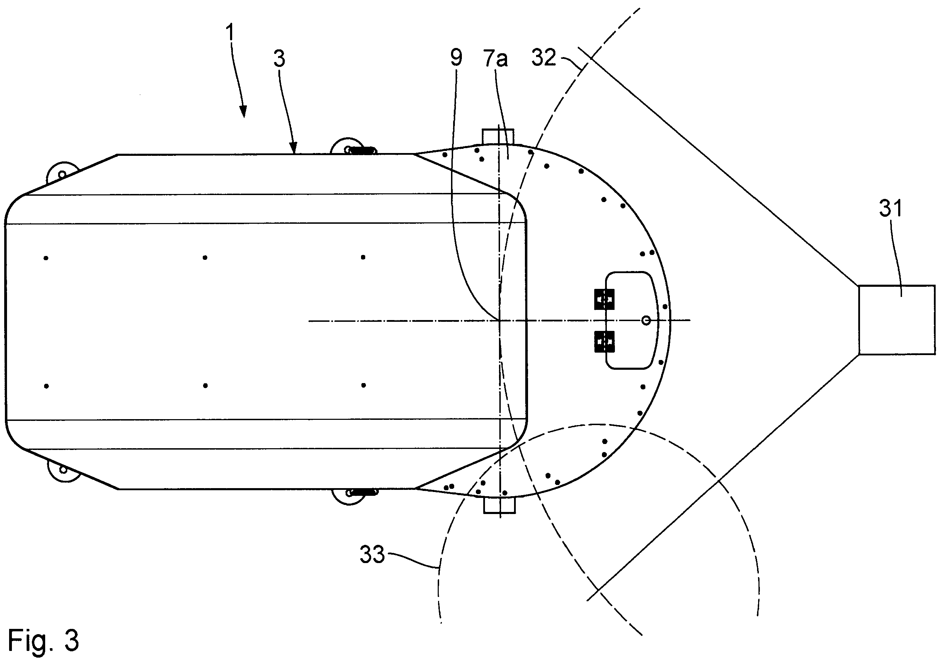

Die Bearbeitungsvorrichtung 1 kann Bestandteil eines Bearbeitungskarussells mit mehreren Bearbeitungsstationen zur Teigbearbeitung sein. Diese anderen Bearbeitungsstationen sind nicht dargestellt. Zur Verlagerung des Teigbottichs 6 in eine mit der Klemmstellung übereinstimmende Bearbeitungsposition des Teigbottichs 6 zur Bearbeitung des Teiges durch die Bearbeitungsvorrichtung 1 und zur Verlagerung des Teigbottichs 6 aus der Bearbeitungsposition hin zu einer weiteren Position zur Bearbeitung durch eine weitere Bearbeitungsvorrichtung oder Bearbeitungsstation des Karussells dient ein in der Fig. 3 schematisch angedeuteter Karussellantrieb 31, der im Bereich einer zentralen Drehachse des Karussells angeordnet ist. In der Bearbeitungsposition ist der Bottich-Klemmfuß 17 zum Klemmen relativ zur Halteeinrichtung 12 angeordnet, wie in den Fig. 1 und 2 dargestellt.

Eine Verlagerung des Teigbottichs 6 durch den Karussellantrieb 31 erfolgt längs einer bogenförmigen Bahn 32 (vgl. Fig. 3). Der Karussellantrieb 31 ist also so ausgebildet, dass eine Verlagerungsrichtung des Teigbottichs 6 durch den Karussellantrieb 31 im Bereich der Bearbeitungsposition bogenförmig ist. Die Bogenform des Zwischenraums 27 zwischen den beiden Klemmschienen 25, 26 entspricht dieser Bogenform der Bahn 32. Der Bottich-Klemmfuß 17 kann daher bei der Bewegung längs der Bahn 32 mit sehr geringem Abstand zwischen den beiden Klemmschienen 25, 26 hindurch verlagert werden.

Beim Betrieb des Bearbeitungskarussells wird der Teig im Teigbottich 6 zunächst in der Bearbeitungsvorrichtung 1 vorgelagerten Bearbeitungsstation zum Kneten und Mischen vorbereitet. Anschließend wird der Teigbottich 6 längs der Bahn 32 in die Bearbeitungsposition verlagert, bei der eine Rotations-Symmetrieachse des Klemmstempels 15 mit der Bottich-Hochachse 9 fluchtet. Eine Zwischenstellung des Teigbottichs 6 auf dem Verlagerungsweg hin zu der Bearbeitungsposition ist in der Fig. 3 gestrichelt bei 33 angedeutet.

Beim Verlagern in die Bearbeitungsposition liegt die Halteeinrichtung 12 zunächst in einer Freigabestellung vor, bei der der Hubkolben 23 in den Hubzylinder 22 eingezogen ist. In dieser Freigabestellung liegt in axialer Richtung zwischen dem Klemmstempel 15 und dem Gegen-Klemmkörper 21, also den beiden Klemmschienen 25, 26 ein Zwischenraum vor, der so groß ist, dass der Bottich-Klemmfuß 17 längs der Bahn 32 von der Seite her in die Halteeinrichtung 12 eingefahren werden kann. Sobald der Bottich 6 die Bearbeitungsposition erreicht hat, wird der Hubzylinder 22 beaufschlagt und der Hubkolben 23 ausgefahren, so dass die Halteeinrichtung 12 die Klemmstellung, die in der Fig. 2 gezeigt ist, erreicht.

Ein Umstellen des Hubkolbens 23 von der Freigabestellung in die Klemmstellung dauert etwa 2 s.

Bei einer nicht dargestellten Ausführungsform ist der Klemmstempel stationär zur Grundrahmenplatte 14 angeordnet und der Gegen-Klemmkörper, ausgebildet insbesondere durch die beiden Klemmschienen, wird axial zum Erreichen der Klemmstellung auf den Klemmstempel 15 angetrieben zu bewegt.

In der Klemmstellung ist der Spannring 19 des Klemmstempels 15 in der umlaufenden Ringnut 20 des Bottich-Klemmfußes 17 aufgenommen, so dass der Teigbottich 6 relativ zum Tragrahmen 2 der Bearbeitungsvorrichtung 1 exakt positioniert ist. Nun kann das Knetwerkzeug 7 aus der in der Fig. 1 gezeigten ausgefahrenen Stellung in den Teigbottich 6 eingefahren werden und die Knet- und Mischbearbeitung des Teiges kann beginnen. Nach erfolgter Bearbeitung wird das Knetwerkzeug 7 wieder in die in der Fig. 1 dargestellte Position ausgefahren und die Halteeinrichtung 12 wird in die Freigabestellung überführt. Sodann kann der Teigbottich 6 längs der Bahn 32 aus der Bearbeitungsposition weiter, beispielsweise zu einer nächsten Bearbeitungsstation, transportiert werden.

Der Gegen-Klemmkörper 21 kann bei einer nicht dargestellten Ausführung der Bearbeitungsvorrichtung auch einteilig ausgeführt sein. Geklemmt werden kann beispielsweise radial außerhalb oder radial innerhalb der Bahn 32.

Die perspektivische Darstellung des Bottich-Klemmfußes 17 nach Fig. 7 zeigt, dass dieser nicht rotationssymmetrisch ausgeführt ist. Der Klemmfuß 17 hat im Bereich zweier gegenüberliegender Umfangspositionen zwei äußere Schrägflächen 34. Diese wirken mit komplementären Schrägflächen 35 an der Unterseite der Klemmschienen 25, 26 in der Klemmstellung zusammen (vgl. Fig. 2).

Fig. 7 zeigt weiterhin einen drehfest mit dem Bottich-Klemmfuß 17 montierten Tragrahmen 36, der zum Transport des Bottichs 6 im Bearbeitungskarussell dient. Über das Lager 29 kann der Bottichbehälter 24 relativ zum Tragrahmen 36 um die Hochachse 9, insbesondere im Knetbetrieb, gedreht werden.

## Patentansprüche

1. Vorrichtung (1) zur Bearbeitung von Teig
- mit einem Tragrahmen (2) mit einer Halteeinrichtung (12) zur lösbaren Halterung eines Teigbottichs (6), der im Betrieb der Vorrichtung (1) motorisch um eine Bottich-Hochachse (9) drehbar ist,
- wobei die Halteeinrichtung (12) aufweist:
-- eine Grundrahmenplatte (14),
-- einen Klemmstempel (15) zur klemmenden Anlage an einer Unterseite (16) eines bodenseitig am Teigbottich (6) angebrachten Bottich-Klemmfußes (17) mit einer Klemmkraft in axialer Richtung längs der Bottich-Hochachse (9), und
-- mindestens einen Gegen-Klemmkörper (21) zum Hintergreifen des Bottich-Klemmfußes (17) zwischen dem Bottich-Klemmfuß (17) und einem Bottichbehälter (24) des Teigbottichs (6),
**dadurch gekennzeichnet, dass**
-- der Klemmstempel (15) axial mittels eines Axialantriebs (22) relativ zur Grundrahmenplatte (14) und relativ zu dem mindestens einen in Bezug zur Grundrahmenplatte (14) stationären Gegen-Klemmkörper (21) verlagerbar ist, so dass in einer Klemmstellung der Halteeinrichtung (12) der Bottich-Klemmfuß (17) zwischen dem Klemmstempel (15) und dem mindestens einen Gegen-Klemmkörper (21) geklemmt ist,
-- wobei die Halteeinrichtung (12) für den Axialantrieb (22) einen Hubzylinder hat, der unterhalb des Klemmstempels (15) angeordnet und an der Grundrahmenplatte (14) festgelegt ist.

2. Vorrichtung nach Anspruch 1, **dadurch gekennzeichnet, dass** eine Anlagewand (18) des Klemmstempels (15) zur Anlage an der Unterseite (16) des Bottich-Klemmfußes (17) profiliert ausgeführt ist.

3. Vorrichtung nach Anspruch 1 oder 2, **dadurch gekennzeichnet, dass** der Gegen-Klemmkörper (21) zweiteilig ausgeführt ist und den Bottich-Klemmfuß (17) beidseitig hintergreift.

4. Vorrichtung nach Anspruch 3, **gekennzeichnet durch** einen Karussellantrieb (31) zur Verlagerung des Teigbottichs (6) in eine Bearbeitungsposition zur Bearbeitung des Teiges **durch** die Bearbeitungsvorrichtung (1) und aus der Bearbeitungsposition hin zu einer weiteren Position zur Bearbeitung **durch** eine weitere Bearbeitungsvorrichtung,
- wobei in der Bearbeitungsposition der Bottich-Klemmfuß (17) zum Klemmen relativ zur Halteeinrichtung (12) angeordnet ist,
- wobei der Karussellantrieb (31) so ausgebildet ist, dass eine Verlagerungsrichtung des Teigbottichs (6) **durch** den Karussellantrieb (31) im Bereich der Bearbeitungsposition bogenförmig ist,
- wobei der Gegen-Klemmkörper (21) zwei Klemmschienen (25, 26) aufweist, zwischen denen ein bogenförmiger Zwischenraum (27) zur Durchführung des Bottich-Klemmfußes (17) vorliegt.

5. Bearbeitungskarussell zum Bearbeiten von Teig,
- mit mindestens zwei Vorrichtungen nach einem der Ansprüche 1 bis 4,
- mit mindestens einem Teigbottich (6), wobei der Teigbottich (6) einen Bottich-Klemmfuß (17) und einen Bottichbehälter (24) aufweist, wobei der Bottichbehälter (24) um die Bottich-Hochachse (9) drehbar am Bottich-Klemmfuß (17) des Teigbottichs (6) gelagert ist, und
- mit einem Karussellantrieb zum Verlagern des mindestens einen Teigbottichs (6) zwischen Bearbeitungspositionen der jeweiligen Bearbeitungsstationen.

## Claims

1. Device (1) for processing dough
- with a support frame (2) with a holding means (12) for the disconnectable holding of a dough trough (6) that is rotatable around a vertical trough axis (9) by motor during operation of the device (1),
- wherein the holding means (12) comprises:
- - a base frame plate (14),
- - a clamping stamp (15) for clamping application to an underside (16) of a trough clamping foot (17) affixed to the floor of the dough trough (6) by means of a clamping force in an axial direction alongside the vertical trough axis (9), and
-- at least one counter clamping body (21) for engaging behind the trough clamping foot (17) between the trough clamping foot (17) and a trough container (24) of the dough trough (6),
**characterised in that**
- - the clamping stamp (15) can be displaced axially by means of an axial drive (22) relative to the base frame plate (14) and relative to the at least one counter clamping body (21) that is stationary in relation to the base frame plate (14), so that the trough clamping foot (17) is clamped between the clamping stamp (15) and the at least one counter clamping body (21) in a clamping position of the holding means (12),
- - wherein the holding means (12) for the axial drive (22) has a lifting cylinder arranged below the clamping stamp (15) and affixed to the base frame plate (14).

2. Device according to claim 1, **characterised in that** an abutment wall (18) of the clamping stamp (15) for abutting to the underside (16) of the trough clamping foot (17) is designed with a profile.

3. Device according to claim 1 or 2, **characterised in that** the counter clamping body (21) is designed in two parts and engages the trough clamping foot (17) from behind on both sides.

4. Device according to claim 3, **characterised by** a revolving drive (31) for displacing the dough trough (6) into a processing position for processing the dough by means of the processing device (1), and from the processing position to a further position for processing with a further processing device,
- wherein the trough clamping foot (17) is arranged for clamping relative to the holding means (12) in the processing position,
- wherein the revolving drive (31) is designed in such a way that a displacement direction of the dough trough (6) by the revolving drive (31) in the area of the processing position is arc-shaped,
- wherein the counter clamping body (21) comprises two clamping rails (25, 26) between which an arc-shaped gap (27) for guiding through the trough clamping foot (17) is present.

5. Processing carousel for processing dough,
- with at least two devices according to one of the claims 1 to 4,
- with at least one dough trough (6), wherein the dough trough (6) comprises a trough clamping foot (17) and a trough container (24), wherein the trough container (24) is mounted on the trough clamping foot (17) of the dough trough (6) to rotate around the vertical trough axis (9), and
- with a revolving drive for displacing the at least one dough trough (6) between processing positions of the relevant processing stations.

## Revendications

1. Dispositif (1) de traitement d'une pâte
- comprenant un cadre support (2) pourvu d'un dispositif de maintien (12) permettant le maintien amovible d'une cuve à pâte (6), qui peut être amenée en rotation de façon motorisée autour d'un axe vertical (9) de cuve lors du fonctionnement du dispositif (1),
- le dispositif de maintien (12) comprenant :
-- une plaque de cadre de base (14),
-- un poinçon de serrage (15) destiné à venir en appui par serrage sur une face inférieure (16) d'un pied de serrage (17) de cuve monté du côté du fond sur la cuve à pâte (6) avec une force de serrage dans la direction axiale le long de l'axe vertical (9) de cuve, et
-- au moins un corps de serrage complémentaire (21) destiné à venir se plaquer derrière le pied de serrage (17) de cuve entre le pied de serrage (17) de cuve et un contenant (24) de cuve de la cuve à pâte (6),
-- **caractérisé en ce que** le poinçon de serrage (15) peut être déplacé axialement au moyen d'un entraînement axial (22) par rapport à la plaque de cadre de base (14) et par rapport au ou aux corps de serrage complémentaires (21) fixes par rapport à la plaque de cadre de base (14), de sorte que dans une position de serrage du dispositif de maintien (12), le pied de serrage (17) de cuve est serré entre le poinçon de serrage (15) et le ou les corps de serrage complémentaires (21),
-- le dispositif de maintien (12) présentant pour l'entraînement axial (22) un cylindre de levage, qui est agencé sous le poinçon de serrage (15) et fixé sur la plaque de cadre de base (14).

2. Dispositif selon la revendication 1, **caractérisé en ce qu'**une paroi d'appui (18) du poinçon de serrage (15) destinée à être en appui sur la face inférieure (16) du pied de serrage (17) de cuve est profilée.

3. Dispositif selon la revendication 1 ou 2, **caractérisé en ce que** le corps de serrage complémentaire (21) est réalisé en deux parties et vient en prise des deux côtés derrière le pied de serrage (17) de cuve.

4. Dispositif selon la revendication 3, **caractérisé par** un entraînement à carrousel (31) destiné à déplacer la cuve à pâte (6) dans une position de traitement permettant de traiter la pâte au moyen du dispositif de traitement (1) et de la position de traitement dans une autre position de traitement au moyen d'un autre dispositif de traitement,
- dans la position de traitement, le pied de serrage (17) de cuve étant agencé par rapport au dispositif de maintien (12) pour le serrage,
- l'entraînement à carrousel (31) étant conçu de manière à ce qu'une direction de déplacement de la cuve à pâte (6) par l'entraînement à carrousel (31) dans la zone de la position de traitement est arquée,
- le corps de serrage complémentaire (21) comprenant deux rails de serrage (25, 26), entre lesquels se situe un espace intermédiaire arqué (27) permettant le passage du pied de serrage (17) de cuve.

5. Carrousel de traitement destiné au traitement d'une pâte,
- avec au moins deux dispositifs selon l'une quelconque des revendications 1 à 4,
- avec au moins une cuve à pâte (6), la cuve à pâte (6) disposant d'un pied de serrage (17) de cuve et d'un contenant (24) de cuve, le contenant (24) de cuve étant monté sur le pied de serrage (17) de cuve de la cuve à pâte (6) de manière rotative autour de l'axe vertical (9) de cuve, et
- avec un entraînement à carrousel destiné à déplacer la ou les cuves à pâte (6) entre les positions de traitement des stations de traitement respectives.
